# EUROPEAN PATENT APPLICATION

(11) **EP 2 819 359 A1**
(43) Date of publication of application: **31.12.2014**
(21) Application number: 12869123.5
(22) Date of filing: 12.11.2012
(51) Int. Cl.: H04L 12/801, H04L 12/911

(54) **COMMUNICATION DEVICE AND COMMUNICATION SYSTEM**

(30) Priority: 24.02.2012 JP 2012038156
(71) Applicant: Hitachi, Ltd., Tokyo 100-8280 (JP)
(72) Inventor: YAZAKI Takeki, Tokyo 100-8280 (JP); ISOBE, Takashi, Tokyo 100-8280 (JP)
(74) Representative: MERH-IP Matias Erny Reichl Hoffmann
(86) International application number: PCT/JP2012/079309
(87) International publication number: WO 2013/125109

(57) **Abstract**

There is provided a communication device for controlling an upper limit bandwidth of TCP communication for transmission. There is further provided a communication device for enhancing a communication bandwidth for TCP and restricting it to an upper limit for transmission by use of new TCP for enhancing a communication bandwidth. The device comprises a transmission bandwidth control unit for determining a communication bandwidth of each session of TCP or new TCP, a token bucket update unit for determining whether packets are transmittable per session, and a maximum bandwidth control unit for determining whether packets are transmittable based on an upper limit of a total sum of all the set sessions, wherein when the maximum bandwidth control unit determines that packets are transmittable, the token bucket update unit transmits packets of a session determined as transmittable.

## Description

### Technical Field

The present invention relates to a communication device and a communication system, and particularly to a communication device and a communication system for relaying communication between computers.

### Background Art

WAN (Wide Area Network) using an IP-VPN (Internet Protocol-Virtual Private Network) technique or the like is generally used as a communication network between global sites.

When a terminal at a site makes communication with a terminal at other overseas site, communication is made via a line connecting an own site's LAN (Local Area Network) and a domestic WAN, a line connecting the domestic WAN and an overseas WAN, and a line connecting the overseas WAN and other site's LAN. The lines are restricted in their available bandwidths depending on contracted bandwidths.

Communication between terminals generally employs TCP (Transport Communication Protocol). In the TCP communication, a reception terminal feedback notifies the amount of received packets to a transmission terminal for data (called packet) transmitted by the transmission terminal. If the amount of feedback-notified received packets does not increase, the transmission terminal determines that discard is detected.

Further, the transmission terminal manages a parameter called window size (transmittable data size even if completed reception is not notified from the reception terminal), and changes the window size depending on the presence of RTT (Round Trip Time) or detected discard.

The transmission terminal determines that a network is congested when RTT increases or discard is detected, and reduces the window size, thereby decreasing the transmission bandwidth and avoiding the congested network. Further, the network is determined as vacant when RTT decreases or discard is not present, and the window size is increased, thereby increasing the transmission bandwidth and making effective use of the line bandwidth of the network. As described above, in communication using TCP, the transmission bandwidth largely depends on RTT and the discard rate, and thus only the transmission bandwidth remarkably lower than the contracted bandwidth can be obtained in an environment in which RTT is large as in the WAN, the contracted bandwidth is restricted and the packets are discarded.

A technique for solving the problems is described in PTL 1. The present literature describes that there are provided a means by which a device connected to a reception terminal feedback notifies all of discard portions to a device connected to a transmission terminal, a means by which the device connected to the transmission terminal retransmits the feedback notified discard portions, and a means by which the device connected to the transmission terminal controls a transmission bandwidth based on the retransmission bandwidth and discarded bandwidth, thereby improving the transmission bandwidth.

### Citation List

### Patent Literature

PTL 1: WO 2011033894 A

### Summary of Invention

### Technical Problem

A WAN contracted bandwidth in IP-VPN may be smaller than a line bandwidth, and packets transmitted by the transmission terminal described in PTL 1 in excess of the contracted bandwidth may be discarded in WAN. Communications other than TCP, such as UDP communication with other protocol, are present, but there is a problem that when the transmission terminal described in PTL 1 consumes the entire contracted bandwidth, a deterioration in communication quality such as communication delay time or packet discard rate in the UDP communication or the like is caused.

It is therefore an object of the present invention to prevent a deterioration in communication with other protocols and to control a transmission bandwidth for TCP communication.

### Solution to Problem

In order to solve the above problems, one aspect of the present invention is a communication device for relaying two TCP communications including a first TCP communication and a second TCP communication, which complies with a communication bandwidth determined based on the regulation of the second TCP communication and a maximum bandwidth of the second TCP communication and controls an upper limit bandwidth of the second TCP communication for packet transmission.

Another aspect is a relay device for relaying two TCP communications including a first TCP communication and a second TCP communication, which includes a transmission bandwidth control unit for determining a communication bandwidth in the second TCP communication based on the regulation of the second TCP communication, a maximum transmission bandwidth setting unit for setting a maximum bandwidth of the second TCP communication, and a buffer for storing packets communicated in the first TCP communication therein, wherein the buffer is instructed to transmit packets based on the determined communication bandwidth and the maximum bandwidth, thereby transmitting packets. The problems to be solved by the present invention and the solution thereto will be apparent in "Description of Embodiments" and the drawings.

### Advantageous Effects of Invention

According to one aspect of the present invention, it is possible to prevent a deterioration in other protocol communications sharing a line and to enhance a communication bandwidth with new TCP for enhancing a communication bandwidth as a second TCP communication for TCP communication.

### Brief Description of Drawings

[FIG. 1] FIG. 1 is a system diagram in which communication devices #1/#2 and 910/920 are arranged on the border between WAN and LAN.
[FIG. 2] FIG. 2 is a diagram illustrating an exemplary format of a packet.
[FIG. 3] FIG. 3 is a diagram illustrating exemplary blocks of a communication device 1000.
[FIG. 4] FIG. 4 is a block diagram illustrating an exemplary standard TCP unit (NIF0 TCP) 1007 inside the communication device 1000.
[FIG. 5] FIG. 5 is a block diagram illustrating an exemplary conventional TCP unit (NIF1 TCP) 914/923 inside the communication device 1000.
[FIG. 6] FIG. 6 is a system diagram in which the communication devices 910/920 are installed on the border between WAN and LAN to make communication by use of unique TCP between the communication devices.
[FIG. 7] FIG. 7 is an explanatory diagram of a bandwidth control system.
[FIG. 8] FIG. 8 is an explanatory diagram of a retransmission control system.
[FIG. 9] FIG. 9 is a sequence diagram in which the communication devices #1, #2, 100 and 101 ACK return packets by one-packet offset.
[FIG. 10] FIG. 10 is a flowchart illustrating the operations of a packet transmission control unit 3207.
[FIG. 11] FIG. 11 is an explanatory diagram of a congestion control system.
[FIG. 12] FIG. 12 is a block diagram illustrating exemplary unique TCP units (NIF1 unique TCP) 2501/2502 inside the communication device 1000.
[FIG. 13] FIG. 13 is a diagram illustrating an exemplary structure of the packet transmission control unit 3207.
[FIG. 14] FIG. 14 is a diagram illustrating an exemplary session/shaper table.
[FIG. 15] FIG. 15 is a flowchart when a transmission bandwidth control unit 3206 updates a control bandwidth.
[FIG. 16] FIG. 16 is a diagram illustrating an exemplary transmission/retransmission bandwidth table 3205 per shaper.
[FIG. 17] FIG. 17 is an explanatory diagram of values held in the transmission/retransmission bandwidth table 3205 per shaper.
[FIG. 18] FIG. 18 is a flowchart for updating a control bandwidth.

### Description of Embodiments

The present invention will be described below with reference to the embodiments.

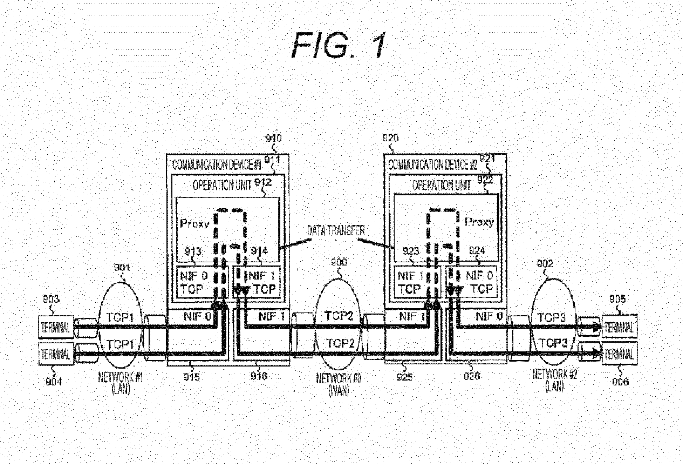

FIG. 1 illustrates how a communication device #1(910) and a communication device #2(920) are installed on the border between a network #0(900) and networks #1, 2 (901, 902) and communication is made via three TCP communications between terminals (903, 904) connected to the network #1(901) and terminals (905, 906) connected to the network 2(902). The communication device #1(910) includes network interfaces NIF0/1 (915/916) and an operation unit 911. The operation unit 911 includes TCP modules 913/914 for making TCP communication, and a Proxy module 912 for performing TCP conversion (for converting TCP1 to TCP2, for example).

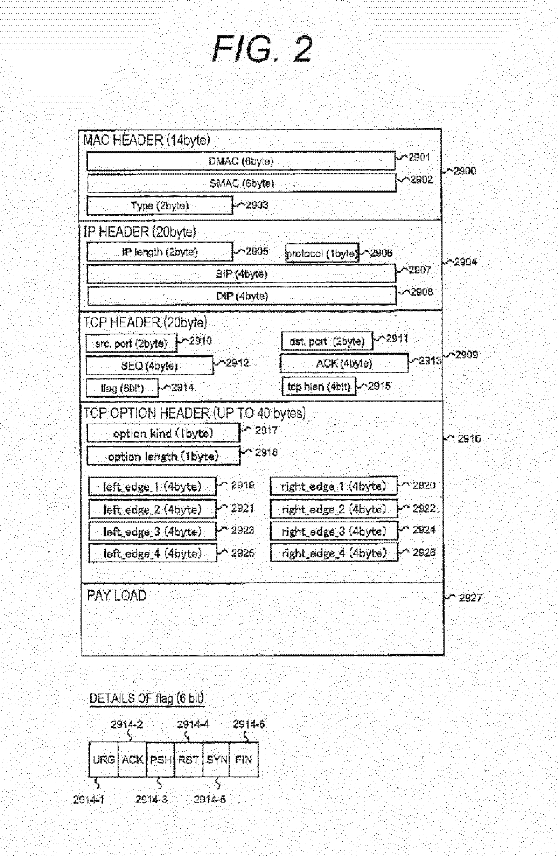

FIG. 2 illustrates a format of packets exchanged according to the present embodiment. A packet includes a MAC header 2900, an IP header 2904, a TCP header 2909, a TCP option header 2916, and a pay load 2927. The MAC header 2900 includes DMAC 2901 indicating a destination MAC address, SMAC 2902 indicating a source MAC address, and Type 2903 indicating a MAC frame type. The IP header 2904 includes IP length 2905 indicating a packet length except the MAC header, protocol 2906 indicating a protocol number, SIP 2907 indicating a source IP address, and DIP 2908 indicating a destination IP address. The TCP header 2909 includes src.port 2910 indicating a source port number, dst.port 2911 indicating a destination port number, SEQ 2912 indicating a transmission sequence number, ACK 2913 indicating a reception sequence number, flag 2914 indicating a TCP flag number, and tcp hlen 2915 indicating a header length of TCP. The flag 2914 is configured of the bits including URG 2914-1, ACK 2914-2, PSH 2914-3, RST 2914-4, SYN 2914-5 and FIN 2914-6. The TCP option header 2916 includes option kind 2917 indicating an option kind and option length 2918 indicating an option length as well as left_edge_1 to 4 (2919, 2921, 2923, 2925) and right_edge_1 to 4 (2920, 2922, 2924, 2926) both describing partially received parts. Communication between terminals will be described by way of example, but the communication devices 910, 920 and the like according to the present embodiment may be applied to communication between computers capable of TCP communication, communication between a client computer and a server computer, and communication between distributed file servers.

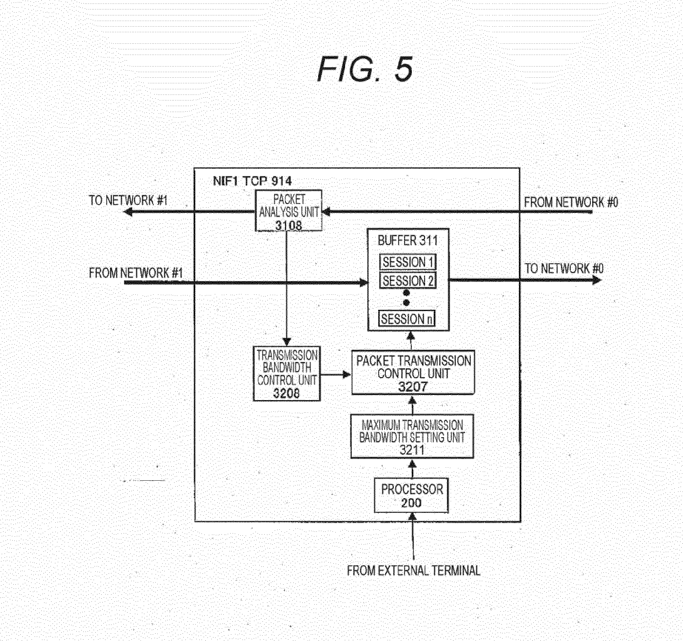

The outline operations of the communication devices #1, 2 will be described with reference to FIGS. 1 and 5.

Communication is made between the terminals 903, 904 and the communication device #1(910) via TCP1, between communication devices #1 and #2 via TCP2, and between the communication device #2 and the terminals 905, 906 via TCP3, and the packets transmitted by the terminals 903 and 904 are communicated to the terminals 905 and 906. The communication device #1 performs conversion from TCP1 to TCP2 and the communication device #2 performs protocol conversion from TCP2 to TCP3.

FIG. 5 illustrates NIF1 TCP 914 in the communication device #1. A transmission bandwidth control unit 3208 determines a communication bandwidth of packets to be transmitted to the network #0 based on the regulation of TCP2 per session. The session is a flow of packets determined by the src.port 2910, the dst.port 2911 indicating a destination port number, the SIP 2907, and the DIP 2908. The determination is made based on information transmitted from the communication device #2 in TCP2 and extracted by a packet analysis unit 3108, such as ACK packets for the packets transmitted by the communication device #1. The ACK packet is a packet indicating that a packet transmitted by the communication device #1 is received by the communication device #2, and has ACK of 1 in FIG. 2. That is, the transmission bandwidth control unit 3208 determines a communication bandwidth of packets to be transmitted to the network #0 based on the ACK packets from the network #0. Alternatively, the transmission bandwidth control unit 3208 calculates a communication bandwidth of packets to be transmitted based on a communication situation in the network #0.

The NIF1 TCP 914 includes a maximum transmission bandwidth setting unit 3211, and a total sum of bandwidths of all the sessions is set by an external terminal via a processor 200. Further, the NIF1 TCP 914 includes a buffer 3111 per session, and stores packets input via the network #1 per session. A packet transmission control unit 3207 determines a timing to transmit packets from the buffer 3111 per session based on the communication bandwidth per session determined by the transmission bandwidth control unit 3208 and a total sum of bandwidths of all the sessions set by the maximum transmission bandwidth setting unit 3211.

When being input with packets via the network #1, the rNIFO TCP 913 receives the packets of TCP1 and the Proxy 912 rewrites the information on the packets as needed and transmits it to the NIF1 TCP 914. The NIF1 TCP 914 stores the packets in the buffer 311 per session. As described above, the transmission bandwidth control unit 3208 determines a transmission bandwidth from the buffer per session based on the packets from the network #0, and notifies the result as communication bandwidth information per session to the packet transmission control unit 3207. The packet transmission control unit 3207 determines whether a total sum of transmission bandwidths of all the sessions can be complied when transmitting the packets from the buffer 311 based on the maximum bandwidth set in the maximum transmission bandwidth setting unit 3211. Further, a determination is made as to whether packets can be transmitted from each buffer 311 based on the communication bandwidth information per session. The packets in a session (buffer) for which a total sum of transmission bandwidths "can" be complied and the session (buffer) "can" transmit are determined as "transmittable", and a transmission request signal per session is transmitted to the buffer 311. The buffer 311 reads the packets from the buffer per session corresponding to the information, and transmits the packets to the network #0 via the NIF1 916. The maximum transmission bandwidth setting unit 3211 may be set with a total sum of bandwidths of all the sessions via a management network from an external terminal.

According to the embodiment described above, the transmission bandwidth control unit 3208 determines a communication bandwidth of packets per session determined by the protocol regulation of TCP2, and the packet transmission control unit 3207 determines whether the packets can be transmitted based on a total sum of bandwidths of all the sessions of TCP2 and the communication bandwidth determined by the transmission bandwidth control unit 3208, and transmits the packets by the buffer 311, thereby controlling an upper limit bandwidth of TCP2 while complying with the protocol regulation of TCP2.

A variant will be described below.

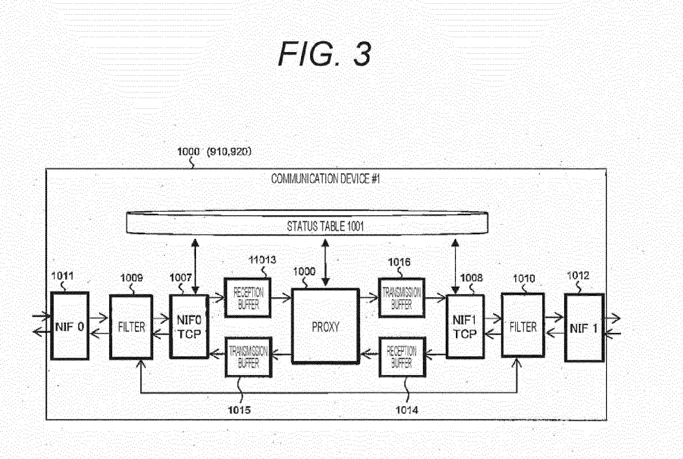

There will be described in detail the operations of the communication devices #1 and 2 when the number of sessions is 1 and TCP2 of FIG. 1 is conventional TCP. FIG. 3 illustrates a block diagram of a hardware-mounted communication device #1(1000) (corresponding to the communication devices 910 and 920 in FIG. 1) according to the present embodiment. The communication device #1(1000) includes network interfaces NIF0/1 (1011/1012) for exchanging packets with an external network, filters (1009/1010) for routing UDP packets other than TCP through 1007, 1008, 1013 to 1016, and 1000, TCP modules 1007/1008 destined for NIF0/1 for controlling the TCP communication, a transmission buffer 1013 and a reception buffer 1015 managed by the TCP module 1007 destined for NIF0, a transmission buffer 1016 and a reception buffer 1014 managed by the TCP module 1008 destined for NIF1, a proxy 1000 for reloading data between the transmission and reception buffers, and a status table 1001 having an entry per session (the number of entries is 1 in the present embodiment). When it is mounted in software, the status table 1001 and the transmission and reception buffers (1013 to 1016) are held in a storage unit, and the filters (1009/1010), the TCP modules 1007/1008 and the proxy 1000 are held as modules in an operation unit (corresponding to the operation unit 912 in FIG. 1).

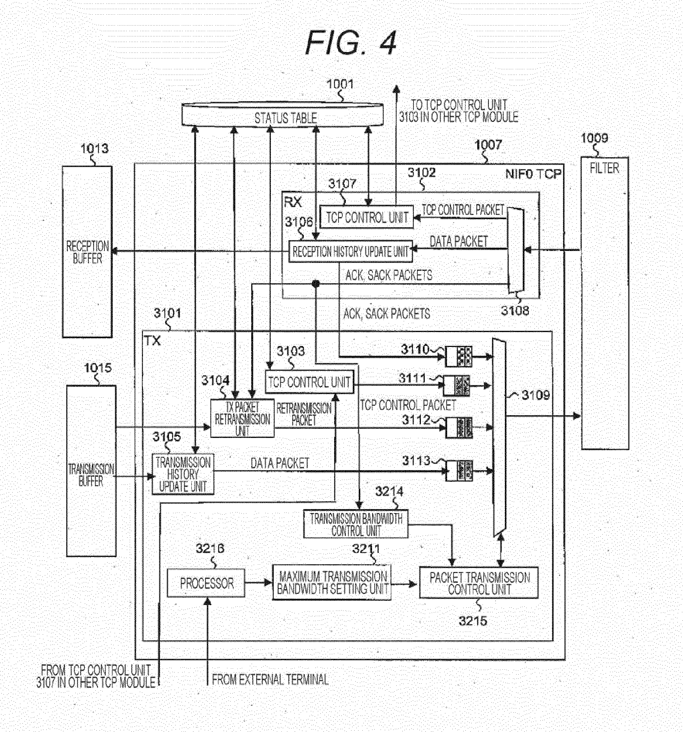

FIG. 4 illustrates a block diagram of the TCP module 1007 destined for NIF0. The block diagram and operations of the TCP module 1008 destined for NIF1 are the same as 1007. The operations of the present module will be described by way of an operation of transmitting packets from the terminals 903 and 904 to the terminals 905 and 906 in FIG. 1.

The TCP block 1007 realizing standard TCP in FIG. 4 includes a RX unit (reception processing unit) 3102 for performing a reception processing and a TX unit (transmission processing unit) 3101 for performing a transmission processing. The RX unit 3102 includes the packet analysis unit 3108 for separating received packets into TCP control packets, data packets and ACK/SACK (selective ACK) packets, a TCP control unit 3107 for changing a TCP status in the status table 1001 based on the received TCP control packets, the status table 1001 having an entry per session to which the packets determined by the src.port 2910, the dst.port 2911 indicating a destination port number, the SIP 2907, and the DIP 2908 belong (the number of entries is 1 in the present embodiment), the TCP control unit 3107 for managing a TCP status per session based on the TCP control packets, and a reception history update unit 3106.

At first, when receiving SYN packets with SYN2914-5 of 1 from the terminals 903 and 904 prior to the start of communication, the packet analysis unit 3108 transmits the packets to the TCP control unit 3107. If a void entry is present in the status table 1001, the TCP control unit 3107 writes the TCP status in which the SYN packets are received into the status table 1001. Further, the TCP control unit 3103 refers to the TCP status, and stores the SYN-ACK packets with both ACK2914-2 and SYN2914-5 of 1 into the buffer 3111. An aggregate unit 3109 transmits the packets from the NIF0 1011 to the terminals 903 and 904.

Then, the terminals 903 and 904 transmit the ACK packets with only ACK2914-2 of 1 to the communication device #1, and when receiving the packets, the packet analysis unit 3108 transmits the packets to the TCP control unit 3107. When receiving the packets, the TCP control unit 3107 writes the TCP status indicating an established session into the status table.

When the TCP control unit then notifies the established session to the TCP module 1008 destined for NIF1, the TCP control unit 3103 in the TCP module 1008 stores the SYN packets similar to those in the terminals 903 and 904 in the buffer 3111, and the aggregate unit 3109 transmits the packets from the NIF1 1012 to the communication device #2. The TCP control unit 3103 writes the TCP status in which the SYN packets are transmitted into the status table 1001. A timing when the aggregate unit 309 transmits the packets will be described below. The communication device #2 performs the same processing as the communication device #1 receives the SYN packets, and transmits the SYN-ACK packets to the communication device #1. When the communication device #1 receives the SYN-ACK packets, the packet analysis unit 3108 transmits the packets to the TCP control unit 3107, and the TCP control unit 3107 writes the TCP status indicating an established session into the status table 1001. The TCP control unit 3103 refers to the TCP status in the status table 1001 and stores the ACK packets similar to those in the terminals 903 and 904 into the buffer 3111, and the aggregate unit 3109 transmits the packets to the communication device #2 so that a session between the communication devices #1 and 2 is established. Establishing a session between the communication device #2 and the terminals 905, 906 is similar thereto.

When a session is established, the terminals 903 and 904 start to transmit the packets. When receiving the packets, the packet analysis unit 3108 in the communication device #1 transmits the packets to the reception history update unit 3106. The reception history update unit 3106 writes the packets into the reception buffer 1013, and writes the ACK packets whose values corresponding to the transmission sequence number SEQ 2912 are described in the reception sequence number ACK 2913 into the buffer 3110. The ACK packets are read from the buffer 3110 by the aggregate unit 3109 and transmitted to the terminals 903 and 904.

When the packets are stored in the reception buffer 1013, the Proxy 1000 reads the packets and transfers them to the transmission buffer 1016, and the transmission buffer 1016 stores the packets therein. When the packets are stored, a transmission history update unit 3105 in the NIF1 TCP 1006 writes the packets into the buffer 3113, and the aggregate unit 3109 transmits the packets to the communication device #2. A timing when the aggregate unit 3109 transmits the packets will be described below. Further, the transmission history update unit 3105 writes a history of the transmitted packets into the status table 1001.

The operation of transmitting the ACK packets to the communication device #1 and the operation of transmitting the packets to the terminals 905 and 906 by the communication device #2 receiving the packets are the same as the communication device #1. When the communication device #1 receives the ACK packets corresponding to the packets transmitted by the communication device #1, a transmission history of the packets is deleted from the status table 1001. On the other hand, the corresponding ACK packets cannot be received, a TX packet retransmission unit 3104 rewrites the same packets as the packets into the buffer 3112, and transmits the packets to the communication device #2 via the aggregate unit 3109.

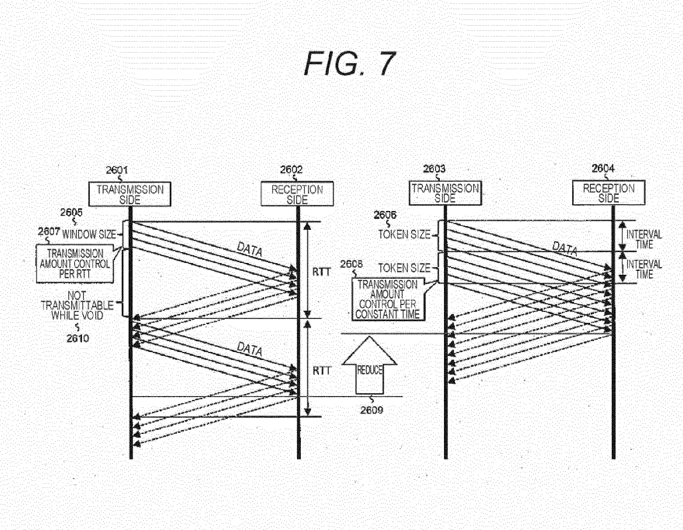

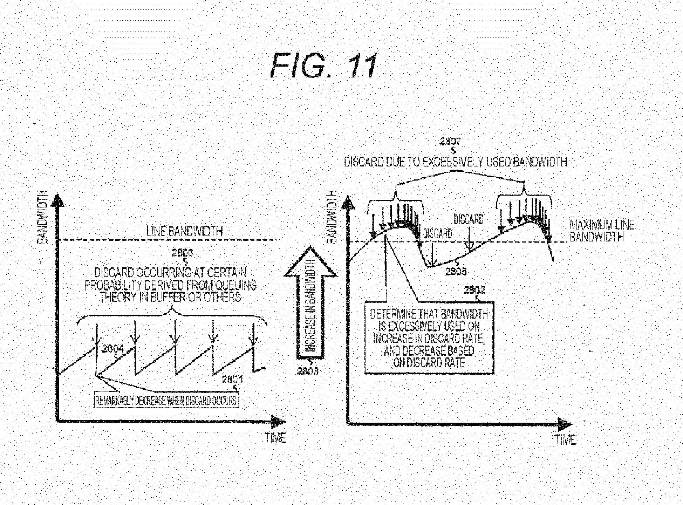

A transmission bandwidth control unit 3214 in the communication device #1 monitors an arrival situation and a discard situation of the transmitted packets based on a reception situation of the ACK packets, determines a communication bandwidth to be transmitted from the communication device #1 to the communication device #2 as described on the left part of FIG. 7 and the left part of FIG. 11, and notifies it to a packet transmission control unit 3215. Further, a maximum bandwidth to be transmitted from the communication device #1 to the communication device #2 is set in the maximum transmission bandwidth setting unit 3211 from an external terminal via a processor 3216, and the maximum bandwidth is notified to the packet transmission control unit 3215. The left part of FIG. 7 and the left part of FIG. 11 will be described below in detail.

The packet transmission control unit 3215 transmits a transmission request signal to the aggregate unit 3109 at a timing to comply with both the communication bandwidth and the maximum bandwidth notified by the transmission bandwidth control unit 3214. When receiving the transmission request signal, the aggregate unit 3109 reads and transmits the packets from the buffer 3113 or 3111.

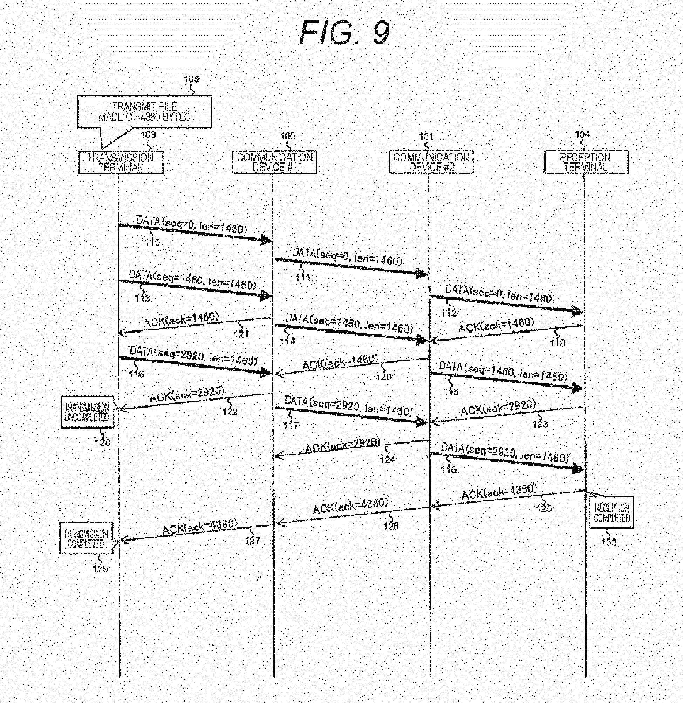

FIG. 9 illustrates a sequence diagram indicating an ACK return method of proxies (100, 101) according to the present embodiment. The communication device #1(100) and the communication device #2(101) (corresponding to the communication devices 910 and 920 in FIG. 1) do not return ACK even if they receive the header packets (110, 111). The communication device #1(100) and the communication device #2(101) receive the second packets (113, 114) and then return the ACK packets (121, 120) for the first packets, respectively. Further, when receiving the third packets (116, 117), they return the ACK packets (122, 124) for the second packets, respectively. The transmission terminal 103 receives only the ACK packet (122) for the second packet even if it transmits the third packet (116), and thus is still determined as transmission uncompleted (128). Only after the third packet (118) arrives from the communication device #2(101) to the reception terminal 104, the tail ACK packet (125) for the third packet is returned from reception terminal 104 and the reception terminal 130 is determined as reception completed (130). When receiving the tail ACK packets (125, 126), the communication device #2(101) and the communication device #1(100) transmit the tail ACK packets (126, 127) for the third packets, respectively. The transmission terminal 103 receives the tail ACK packet 127 and is determined as transmission completed (129). Until the reception terminal 130 is determined as reception completed (130), the tail ACK packets (125, 126, 127) are not returned to the transmission terminal 103 and the transmission terminal 129 is not determined as transmission completed, and thus it is possible to prevent a situation in which the application in the transmission terminal ends although the reception terminal 104 cannot receive edited data, and the edited data disappears. As described above, ACK for a data packet at least one before such as two or three before may be transmitted other than transmitting ACK for a data packet received one packet before. ACK is not transmitted to the header packet 110, and additionally ACK (0 to 1459, for example) not including a reception sequence number corresponding to the tail data of a header packet may be returned thereto and ACK including a reception sequence number corresponding to the tail data of the header packet may not be returned thereto.

Another variant will be described below.

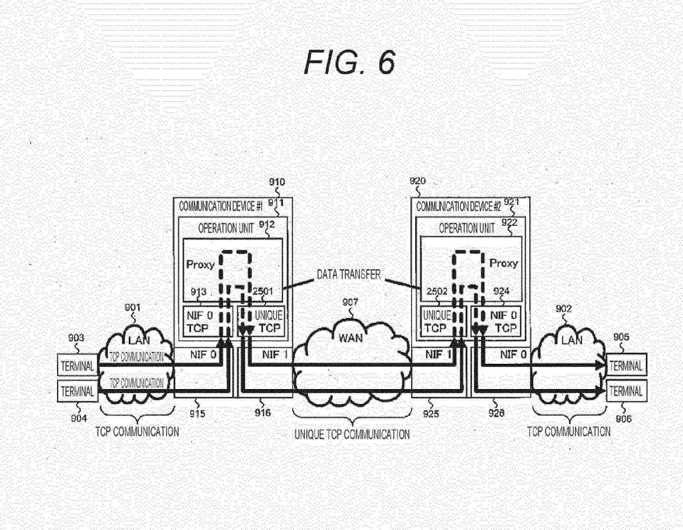

The operations of the communication devise #1 and 2 when a plurality of sessions are present and WAN communication of FIG. 6 is with unique TCP will be described in detail. FIG. 6 is a system diagram in which the TCP module on the NIF1 is replaced with the modules 2501/2502 for performing the unique TCP processing based on FIG. 1. In the present system, communication is made by use of unique TCP in WAN 907.

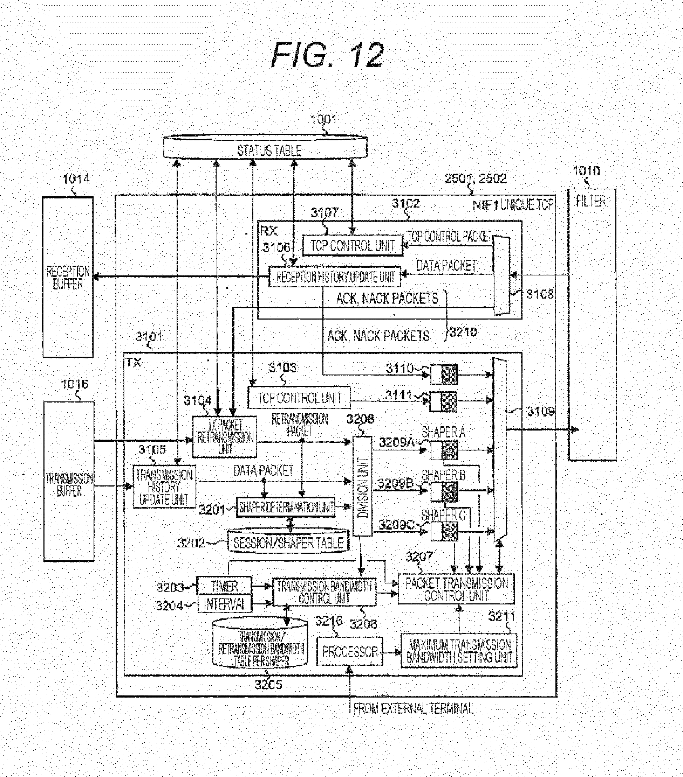

The communication devices #1, 2, and 910/920 can be mounted in the similar blocks to the blocks illustrated in FIG. 3, where the NIF TCP 1008 is replaced with the unique TCP modules 2501/202 illustrated in FIG. 12.

The communication device #2 on the reception terminal side sequentially feedback notifies all the discard portions to the communication device #1 on the transmission terminal side, and the communication device on the transmission terminal side retransmits the discard portions feedback notified from the communication device on the reception terminals side, and controls a total sum of transmission bandwidths and retransmission bandwidths for a specific destination based on the retransmission bandwidths or discarded bandwidths (which may be denoted as retransmission/discard bandwidths) after a reference time and the transmission bandwidths before the reference time, thereby securing a communication bandwidth not depending on RTT or the discard rate.

FIGS. 7, 8 and 11 are the explanatory diagrams illustrating three characteristics of the unique TCP. FIG. 7 illustrates a conventional TCP bandwidth control system as exemplary standard TCP on the left side, and a unique TCP bandwidth control system on the right side. The conventional TCP controls a window size 2605 defining the amount of transmission per RTT in a transmission terminal 2601 (2607) thereby to control a transmission bandwidth. The transmission bandwidth is indicated by window size/RTT. The bandwidth control in the system has a problem that when RTT increases, a time 2610 in which transmission is impossible even if the line is vacant is longer, and the use rate of the line bandwidth decreases. On the other hand, the unique TCP controls a token size 2606 defining the amount of transmission per unit time (2608) thereby to control a transmission bandwidth. The transmission bandwidth is indicated by token size/interval time. With the present system, a time when transmission is impossible even if the line is vacant can be eliminated, and thus the use rate of the line bandwidth increases (2609). It is possible to realize bandwidth control not depending on RTT.

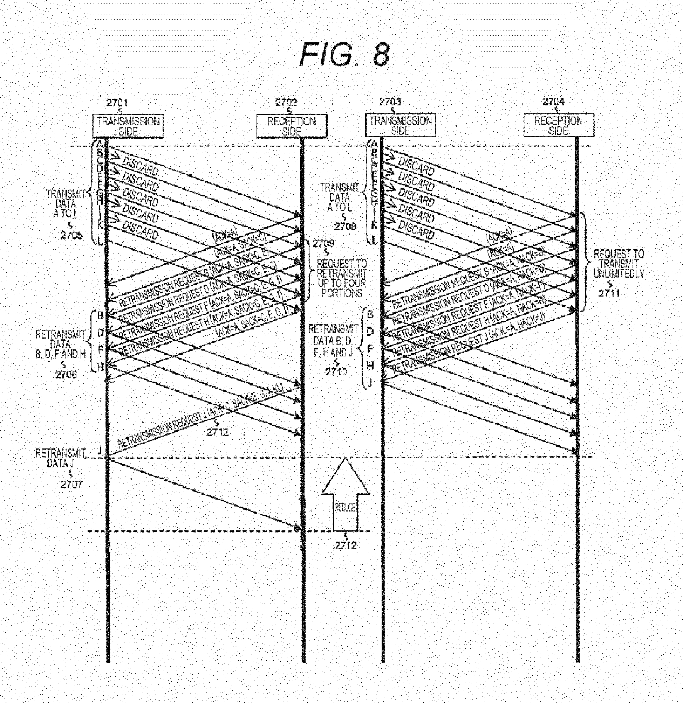

FIG. 8 illustrates a conventional TCP retransmission control system on the left side and a unique TCP retransmission control system on the right side. With the conventional TCP, up to four partially received portions are described in left_edge_1 to 4 (2919, 2921, 2923, 2925) and right_edge_1 to 4 (2920, 2922, 2924, 2926) in the TCP option header 2916 of the ACK packet to be used for selective ACK (SACK). On the other hand, with the unique TCP, up to four parts to be partially retransmitted are described in left_edge_1 to 4 (2919, 2921, 2923, 2925) and right_edge_1 to 4 (2920, 2922, 2924, 2926) in the TCP option header 2916 to be used for negative ACK (NACK).

With the conventional TCP, if B, D, F, H and J among 12 data packets A to L (2705) transmitted from a transmission terminal 2701 to a reception terminal 2702 are discarded in the middle, ACK for the packets transmitted after I cannot be transmitted to the transmission terminal 2701 at this time due to the restriction that up to four received portions can be written into the TCP option header 2916 (2709). The transmission terminal retransmits the packets B, D, F and H discarded from the packets A to I by use of the ACK packets (2709) describing the selective ACK of A to I therein (2706). The reception terminal 2702 receives the retransmitted packets (2706), and then returns the ACK describing selective ACK after the packet I therein (2712). The transmission terminal 2701 may retransmit the packet J discarded after the packet I (2707) after receiving the ACK (2712) describing the selective ACK after the packet I therein. On the other hand, with the unique TCP, even if B, D, F, H and J are discarded from among the 12 data packets A to L (2708) transmitted from a transmission terminal 2703 to a reception terminal 2704, portions to be retransmitted among A to J are sequentially written into left_edge_1 (2919) and right_edge_1 (2920) in the TCP option header 2916, and then the ACK packets for negative ACK (NACK) are returned (2711). Each retransmission request portion is written into only one NACK packet. When receiving the ACK packet (2711) for negative ACK (NACK), the transmission terminal 2703 retransmits the portions B, D, F, H and J requested to retransmit described in the TCP option header 2916 (2710). Also when a large number of packets are discarded, retransmission is completed at one time, and thus a communication time is reduced (2712) and the bandwidth is improved. That is, two communication devices are installed between a transmission terminal and a reception terminal, and the communication device on the reception terminal sequentially feedback notifies all the discarded portions to the communication device on the transmission terminal side.

FIG. 11 illustrates a conventional TCP congestion control system on the left side and a unique TCP congestion control system on the right side, respectively. With the conventional TCP, even if a packet is discarded once, a control bandwidth is remarkably reduced (2801). Even if the line use rate does not reach 100%, discard occurs in the communication line at a certain probability derived from the queuing theory in a buffer or the like (2806). Thus, with the conventional TCP, the bandwidth decreases (2804) until the line use rate reaches 100%, and the line bandwidth may not be completely used. On the other hand, with the unique TCP, if the discard/retransmission rate constantly transits, discard is determined as being just occurring at a certain probability derived from the queuing theory, and the bandwidth increases. When the discard/retransmission rate starts to increase, it is determined that the line bandwidth is used too much, for example, and the control bandwidth is reduced to be smaller than the control bandwidth one RTT before based on the latest discard/retransmission bandwidths and the control bandwidth one RTT before. The control bandwidth is controlled around the line bandwidth, and thus the line bandwidth can be used almost completely.

Herein, the transmission bandwidth indicates an input bandwidth observed per shaper in a division unit 3208 for dividing packets into shapers 3209. Further, the control bandwidth indicates a bandwidth of packets to be transmitted from the shaper 3209 determined based on the regulation of the unique TCP.

FIG. 12 illustrates a block diagram for realizing the unique TCP mounted on the TCP modules 2501/2502 on NIF1 side. The same block diagram for realizing standard TCP mounted on the TCP module 1007 on NIF0 side as in FIG. 4 may be used.

The TCP blocks 2501/2502 realizing the unique TCP are realized by changing the outputs from part of the blocks in the RX unit 3102 and adding some blocks to the TX unit 3101 as illustrated in FIG. 12 based on the TCP block 1007 realizing the standard TCP in FIG. 4. At first, the packet analysis unit 3108 changes the ACK/ SACK packets to ACK packets 3210 for ACK/negative ACK (NACK), and outputs them to the TX packet retransmission unit 3104. Similarly, a discard portion can be notified by TX unit 3101 by changing ACK/SACK packets in the reception history update unit 3106 into ACK/NACK packets 3210, changing ACK/SACK packet to be output to the buffer 3110 into ACK/NACK packets, and transmitting the changed packets.

The TX unit 3101, different from FIG. 4, includes a shaper determination unit 3201 for determining to divide to which shaper per session by use of header information on a transmitted packet and a retransmitted packet, a session/shaper table 3202 defining a destination shaper per session information, the division unit 3208 for dividing packets based on a determination result of the shaper determination unit 3201, and shapers A to C (3209) in order to support communication via a plurality of sessions.

Further, the TX unit 3101 is configured of a timer 3203 for outputting a current time, an interval storage unit 3204 defining an interval time, a transmission bandwidth control unit 3206 for realizing a transmission bandwidth of the unique TCP indicated in the right sides of FIG. 8 and FIG. 11, a transmission/retransmission bandwidth table 3205 per shaper for recording statistic information on a transmission bandwidth or retransmission bandwidth per shaper, the maximum transmission bandwidth setting unit 3211 for setting a maximum value of a transmission bandwidth with the unique TCP, and the packet transmission control unit 3207 for controlling a packet transmission timing to comply with a communication bandwidth per session determined by the transmission bandwidth control unit 3206 of the unique TCP (which will be called control bandwidth) and a maximum bandwidth set by the maximum transmission bandwidth setting unit 3211.

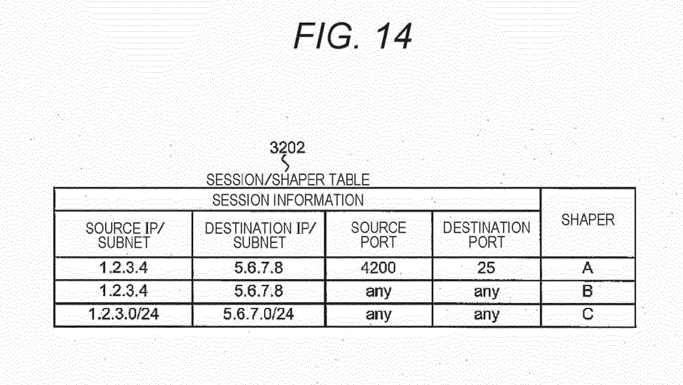

FIG. 14 illustrates a format of the session/shaper table 3202 for defining a shaper used per TCP session. The session/shaper table 3202 describes therein corresponding shaper identification information per session information including source IP/subnet, destination IP/subnet, source port number and destination port number. The shaper determination unit 3201 searches an entry of the session/shaper table 3202 having session information matching with the IP addresses 2907/2908 described in the IP headers of the received packets and the port numbers 2910/2911 described in the TCP headers, and instructs the division unit 3208 to output the packets to the shaper described in the entry.

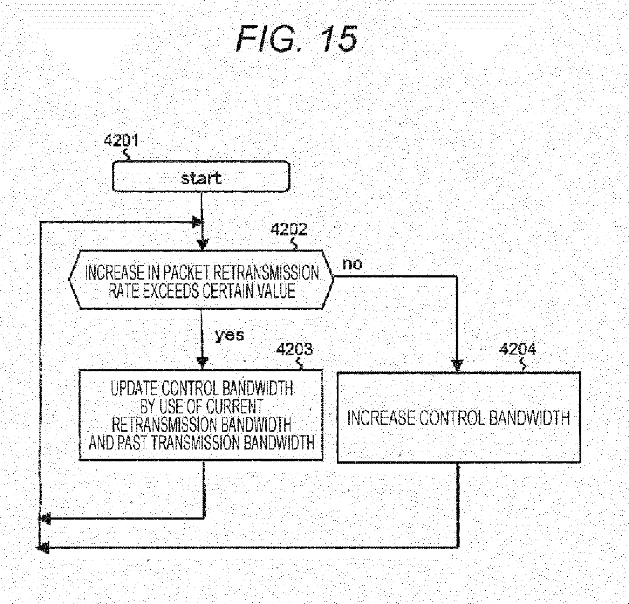

FIG. 15 illustrates a flowchart when the transmission bandwidth control unit 3206 updates a control bandwidth. When the processing starts (step 4201), the transmission bandwidth control unit 3206 determines whether an increase rate of the packet retransmission rate (= retransmission bandwidth/control bandwidth) exceeds a certain value (step 4202). When the rate exceeds, the control bandwidth is updated by use of a current retransmission bandwidth and a past control bandwidth (step 4203). When the rate does not exceed, the control bandwidth is increased (step 4204).

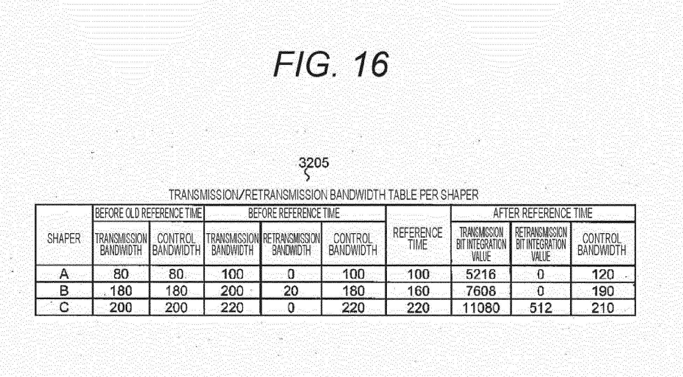

FIG. 16 illustrates a format of the transmission/retransmission bandwidth table 3205 per shaper. The transmission/retransmission bandwidth table 3205 per shaper records transmission bandwidth/control bandwidth before an old reference time, transmission bandwidth/retransmission bandwidth/control bandwidth before a reference time and the reference time, and transmission bit integration value/retransmission bit integration value/control bandwidth after the reference time per shaper. The division unit 3208 for dividing packets into shapers notifies the number of transmission bits and the number of retransmission bits to the transmission bandwidth control unit 3206 so that the transmission bandwidth control unit 3206 can write the transmission bit integration value/retransmission bit integration value into the transmission/retransmission bandwidth table 3205 per shaper.

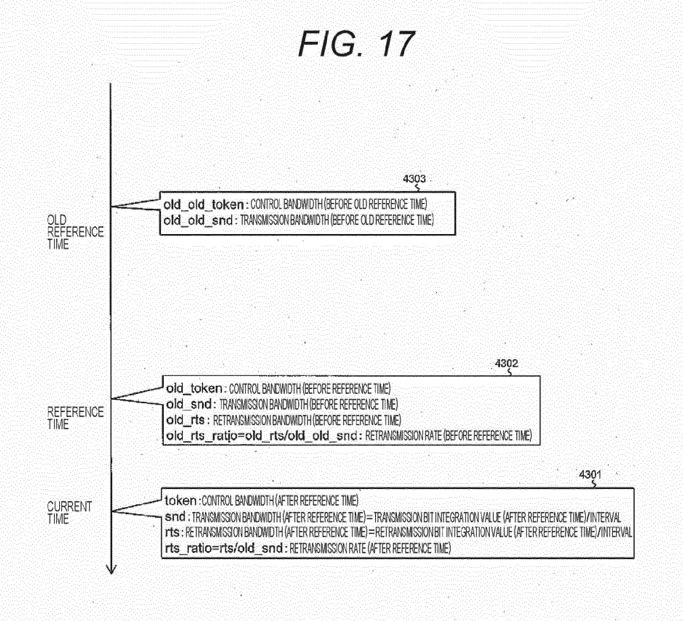

FIG. 17 is a diagram for explaining the meanings of values held by the transmission/retransmission bandwidth table 3205 per shaper. The diagram indicates a temporal progress from the top to the bottom. As illustrated in 4301 in FIG. 17, the control bandwidth after a reference time indicates a control bandwidth at a current time (denoted as token in the present embodiment). The transmission bandwidth after the reference time indicates a transmission bandwidth at a current time (denoted as snd in the present embodiment), and can be found by dividing the transmission bit integration value after the reference time by an interval. The retransmission bandwidth after the reference time indicates a retransmission bandwidth at a current time (denoted as rts in the present embodiment), and can be found by dividing the retransmission bit integration value after the reference time by an interval. As illustrated in 4302 in FIG. 17, the control bandwidth/transmission bandwidth/retransmission bandwidth before the reference time indicate control bandwidth/transmission bandwidth/retransmission bandwidth immediately before the reference time (between a current reference time and an interval time) (indicated as old_token, old_snd, and old_rts, respectively, in the present embodiment). Further, as illustrated in 4303 in FIG. 17, a reference time used one before the currently-used reference time is called old reference time, and the control bandwidth/transmission bandwidth/retransmission bandwidth before the old reference time indicate control bandwidth/transmission bandwidth/retransmission bandwidth immediately before the old reference time (between the old reference time and the interval time, and two interval times before the current reference time) (indicated as old_old_token, old_old_snd, and old_old_rts, respectively, in the present embodiment). As illustrated in 4302 in FIG. 17, a retransmission rate before the reference time old_rts_ratio is found by old_rts/old_old_snd. As illustrated in 4301 in FIG. 17, a current retransmission rate after the reference time rts_ratio is found by rts/old_snd based on the current retransmission bandwidth rts and the transmission bandwidth before the reference time.

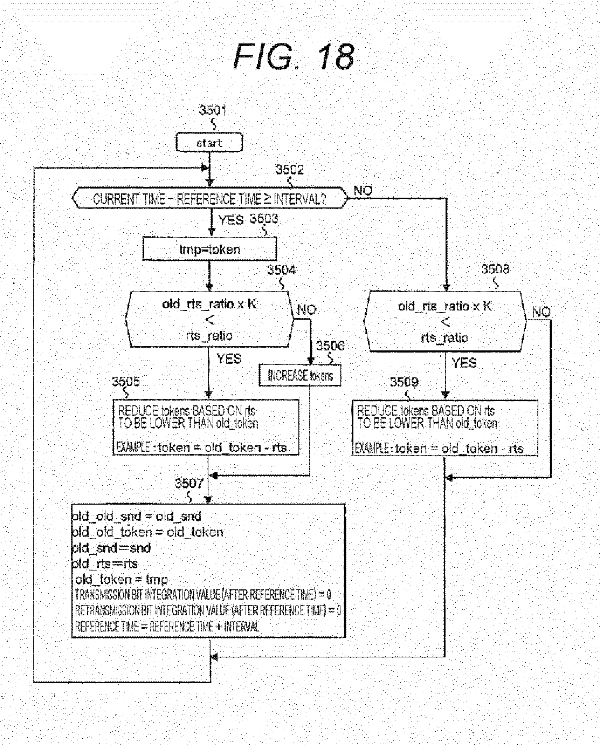

FIG. 18 illustrates a flowchart in which the transmission bandwidth control unit 3206 changes a control bandwidth by use of the values described in the transmission/retransmission bandwidth table 3205 per shaper. When the processing starts (step 3501), the transmission bandwidth control unit 3206 determines whether a difference between a current time output by the timer 3203 and a reference time described in the transmission/retransmission bandwidth table 3205 is equal to or more than an interval 3204 (step 3502). The interval may use measured RTT or the like. When it is determined as true in step 3502, a value of the control bandwidth (after reference time) token is put aside in tmp (step 3503). Further, a determination is made as to whether the retransmission rate (after reference time) rts_ratio found by retransmission bit integration value (after reference time)/interval/transmission bandwidth (before reference time) is K (K: predetermined constant of 1 or more) times higher than the old retransmission rate (before reference time) old_rts_ratio found by retransmission bandwidth (before reference time)/transmission bandwidth (before old reference time) (step 3504). When it is higher, it is determined that the retransmission rate increases, and the value of the control bandwidth (after reference time) token is reduced to be lower than the value of the control bandwidth (before reference time) old_token by use of the retransmission bandwidth rts. For example, the control bandwidth (after reference time) token=control bandwidth (before reference time) old_token-retransmission bandwidth (after reference time) rts is assumed (step 3505). When it is determined as false in step 3504, the control bandwidth (after reference time) token is increased (step 3506) . When steps 3505 and 3506 end, the values including transmission bandwidth (before reference time) old_snd=transmission bandwidth (after reference time) snd, retransmission bandwidth (before reference time) old_rts=retransmission bandwidth (after reference time) rts, reference time=reference time+interval, transmission bit integration value (after reference time) = 0, retransmission bit integration value (after reference time) = 0, control bandwidth (before old reference time) old_old_token = control bandwidth (before reference time) old_token, transmission bandwidth (before old reference time) old_old_snd = transmission bandwidth (before reference time) old_snd, and control bandwidth (before reference time) old_token = tmp are stored in the transmission/retransmission bandwidth table 3205 (step 3507).

When it is determined as false in step 3502, similarly as in step 3504, a determination is made as to whether the retransmission rate (after reference time) rts_ratio found by retransmission bit integration value (after reference time)/interval/transmission bandwidth (before reference time) is K (K: predetermined constant of 1 or more) times higher than the old retransmission rate (before reference time) old_rts_ratio found by retransmission bandwidth (before reference time)/transmission bandwidth (before old reference time) (step 3508). When it is higher, for example, it is determined that the retransmission rate increases, and similarly as in step 3505, the value of the control bandwidth (after reference time) token is reduced to be lower than the value of control bandwidth (before reference time) old_token by use of the retransmission bandwidth rts. For example, control bandwidth (after reference time) token = control bandwidth (before reference time) old_token-retransmission bandwidth (after reference time) rts is assumed (step 3509).

It is possible to reduce a control bandwidth to be smaller than a control bandwidth one RTT before based on the latest discard/retransmission bandwidths indicated in FIG. 11 and the control bandwidth one RTT before with the method for updating a control bandwidth in the transmission bandwidth control unit 3206. The control bandwidth is updated around the line bandwidth, and thus the line bandwidth can be almost completely used.

When the control bandwidth described in the transmission/retransmission bandwidth table 3205 per shaper is changed in order to realize the transmission bandwidth in the unique TCP as described above, the transmission bandwidth control unit 3206 notifies the newly-changed control bandwidth to the packet transmission control unit 3207. The packet transmission control unit 3207 uses the token bucket algorithm to determine whether packets are transmittable from each shaper 3209, and instructs the aggregate unit 3109 to transmit packets from the shaper 3209 in order to comply with the notified control bandwidth per shaper and the maximum transmission bandwidth set in the maximum transmission bandwidth setting unit 3211 at the same time.

With the token bucket algorithm, temporally proportional tokens are accumulated in a token bucket for which a maximum value of tokens to be accumulated is defined, and a packet length to be transmitted is reached, and thus the packets are allowed to transmit. Further, a token corresponding to the transmission packet length is reduced from the token bucket at the same time with packet transmission. The packet transmission control unit 3207 determines a value of tokens to be added to the token bucket based on the control bandwidth notified from the transmission bandwidth control unit 3206 and the setting value in the maximum transmission bandwidth setting unit 3207.

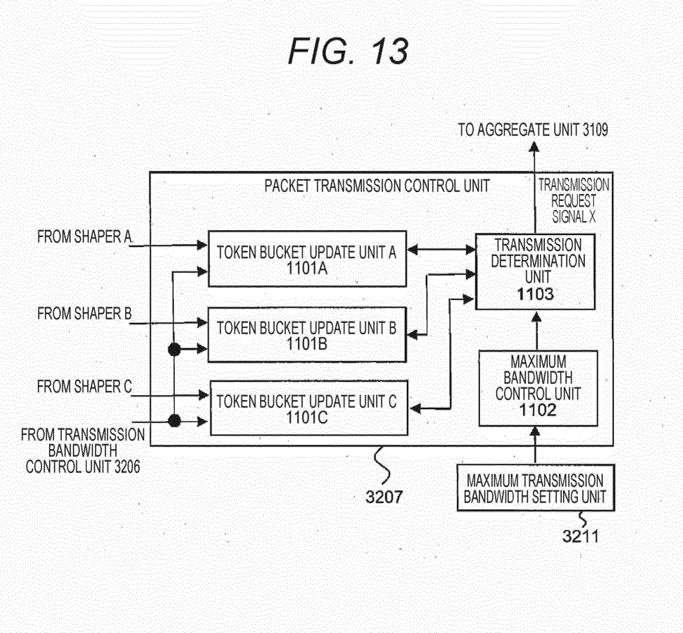

The packet transmission control unit 3207 is illustrated in FIG. 13 in detail. The control unit 3207 is configured of a token bucket update unit X 1101X (X = A, B, C) for controlling a transmission bandwidth of each shaper X3209X (X = A, B, C), a maximum bandwidth control unit 1102 for controlling a total sum of transmission bandwidths of the shapers X, and a transmission determination unit 1103 for receiving transmission availability information transmitted from the token bucket update unit X 1101X and the maximum bandwidth control unit 1102, and transmitting a transmission request signal X to instruct the aggregate unit 3109 to transmit packets from each shaper X on "transmission available."

The token bucket update unit X 1101X is notified, by each shaper X3209X, of a packet length of the oldest received packet which is to be first transmitted from each shaper X 3209 or is stored in the shaper X. The value is described as IP_LENX (X = A, B, C). The packet length may use IP length 2905 in FIG. 2, or information on IP length 2905 added with a TCP header length and the like, for example.

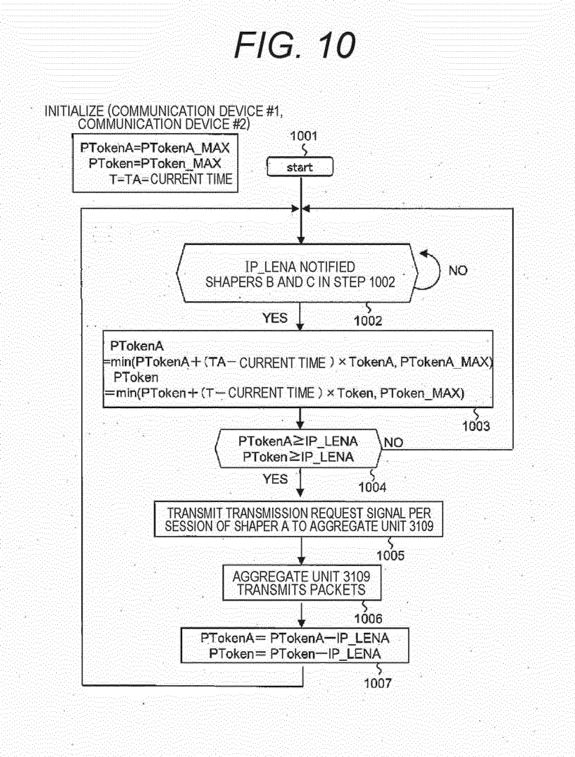

The operations of the packet transmission control unit 3207 will be described with reference to the flowchart in FIG. 10. A determination as to transmitting packets from the shaper A is described, but the same operations are performed also for the shaper B and the shaper C. When the communication device #1 and the communication device #2 are started up, the values of PToken corresponding to a total sum of output bandwidths of all the shapers A, B and C and PTokenA corresponding to the output bandwidth of the shaper A are initialized to the maximum values PToken_MAX and PTokenA_MAX of PToken and PTokenA, respectively. TA when previous packets are transmitted from the shaper A and T when previous packets are transmitted from any of the shapers A, B and C are initialized to a current time.

When a packet is present in the shaper A 3209A and IP_LENA is notified and when the shapers B and C are in step 1002, the processing proceeds to step 1003. Then, a value obtained by adding PTokenA to a value obtained by multiplying an elapsed time from the previous packet transmission time TA of the shaper A by TokenA is compared with PTokenA_MAX, and the smaller value is assumed as new PTokenA. Similarly, a value obtained by adding PToken to a value obtained by multiplying an elapsed time from the previous packet transmission time T by Token is compared with PToken_MAX, and the smaller value is assumed as new PToken (step 1003). Token corresponds to a value set in the maximum transmission bandwidth setting unit 3211. Then, PTokenA is compared with IP_LENA, and when PTokenA ≥ IP_LENA is established and sufficient tokens are present, the token bucket update unit A 1101A transmits a transmission available signal for the shaper A to the transmission determination unit 1103. Further, the maximum bandwidth control unit 1102 compares PToken with IP_LENA, and determines whether PToken ≥ IP_LENA is established and a common token among the shapers A, B and C is present. When PToken ≥ IP_LENA is established, a transmission available signal is transmitted to the transmission determination unit 1103. Then, the transmission determination unit 1103 determines whether all the transmission available signals transmitted by the token bucket update unit A and the maximum bandwidth control unit 1102 are "transmittable" (step 1104). When all is "transmittable", the processing proceeds to step 1105, and otherwise the processing returns to step 1102. In step 1105, the transmission determination unit 1103 transmits a transmission request signal per session of the shaper A to the aggregate unit 3109, and notifies, to the token bucket update unit A and the maximum bandwidth control unit 1102, that it has transmitted the transmission request signal. The aggregate unit 3109 receiving the signal reads packets from the shaper A, and transmits the packets (step 1006). Finally, the packets are transmitted to the network via the filter 1010 and NIF1 1012. Further, the token bucket update unit A and the maximum bandwidth control unit 1102 subtract the transmitted packet length IP_LENA from PTokenA and PToken, and assume new PTokenA and PToken, respectively (step 1007).

As described above, the packet transmission control unit 3207 includes the token bucket update unit X for determining whether packets are transmittable from each shaper X, and the maximum bandwidth control unit 1102 for determining whether packets are transmittable from a shaper X based on an upper limit value of a total sum of transmission bandwidths of the shapers X set in the maximum transmission bandwidth setting unit 3211, and the transmission determination unit 1103 transmits a transmission request signal X to the aggregate unit 3109 when determining that both the token bucket update unit X and the maximum bandwidth control unit 1102 can transmit, and performs bandwidth control on the unique TCP for each session designated in the session/shaper table while complying with the total sum of transmission bandwidths of the shapers X, thereby transmitting packets.

### Industrial Applicability

The present invention is applicable to a communication device and a communication system for relaying communication between terminals.

### Reference Signs List

103, 104, 903, 904, 905, 906 Terminal
100, 101, 910, 920, 1000 Communication device
900, 901, 902, 907 Network

## Claims

1. A communication device for relaying two TCP communications including a first TCP communication and a second TCP communication, comprising:
a transmission bandwidth control unit for determining a communication bandwidth in the second TCP communication based on the regulation of the second TCP communication;
a buffer for storing packets input via the first TCP communication therein; and
a transmission control unit for instructing the buffer to transmit packets based on the determined communication bandwidth and a predetermined maximum bandwidth of the second TCP communication, and transmitting packets stored in the buffer.

2. The communication device according to claim 1,
wherein the buffer includes a buffer per session,
the transmission bandwidth control unit determines a communication bandwidth per session, and
the packet transmission control unit determines transmission of packets per session, and instructs the buffer corresponding to the session to transmit.

3. The communication device according to claim 2,
wherein the packet transmission control unit uses a token bucket algorithm to determine whether packets are transmittable based on the maximum bandwidth and whether packets in each session are transmittable, and only when both the determinations indicate transmission available, instructs the buffer to transmit packets.

4. The communication device according to claims 1 to 3,
wherein the transmission bandwidth control unit determines the communication bandwidth based on a change in packet retransmission rate.

5. The communication device according to claims 1 to 4, comprising:
a maximum transmission bandwidth setting unit for holding information on a predetermined maximum bandwidth of the second TCP communication via external input,
wherein the transmission bandwidth control unit refers to the information on the maximum bandwidth held in the maximum transmission bandwidth setting unit.

6. The communication device according to claims 1 to 5,
wherein the transmission bandwidth control unit determines the communication bandwidth based on packets received in the second TCP communication.

7. A communication system comprising a first communication device and a second communication device for dividing each of a plurality of TCP communications between computers into three TCP communications, and relaying them,
wherein the first communication device makes a first TCP communication with a data transmission computer,
the second communication device makes a second TCP communication with a data reception computer,
a third TCP communication is made between the first communication device and the second communication device, and
the first communication device transmits packets so as to comply with a communication bandwidth based on the regulation of the third TCP communication and a maximum bandwidth of the third TCP communication previously set before the start of communication.

8. The communication system according to claim 7,
wherein the communication bandwidth based on the regulation of the third TCP communication is a communication bandwidth determined based on ACK packets received by the first communication device via the third TCP communication, and
the first communication device complies with the maximum bandwidth of the third TCP communication previously set before the start of communication per TCP communication between computers.

9. A communication method for dividing each of a plurality of TCP communications between computers into three TCP communications, and relaying data transfer,
wherein a first communication device makes a first TCP communication with a data transmission computer,
a second communication device makes a second TCP communication with a data reception computer,
a third TCP communication is made between the first communication device and the second communication device, and
the first communication device transmits packets so as to comply with a communication bandwidth based on the regulation of the third TCP communication and a maximum bandwidth of the third TCP communication previously set before the start of communication.
